# EUROPÄISCHE PATENTSCHRIFT

(11) **EP 2 829 340 B1**
(45) Veröffentlichungstag und Bekanntmachung des Hinweises auf die Patenterteilung: **23.01.2019**
(21) Anmeldenummer: 13177415.0
(22) Anmeldetag: 22.07.2013
(51) Int. Cl.: B23B 31/20

(54) **Spannvorrichtung**
Clamping device
Dispositif de serrage

(43) Veröffentlichungstag der Anmeldung: 28.01.2015
(73) Patentinhaber: Narr Beteiligungs GmbH, 73230 Kirchheim/Teck (DE)
(72) Erfinder: Mauch, Peter, 78598 Königsheim (DE)
(74) Vertreter: Ruckh, Rainer Gerhard

(56) Entgegenhaltungen:
- EP-A2- 0 428 058
- EP-A2- 0 566 898
- US-A- 4 858 938
- US-A- 5 096 213

## Beschreibung

Die Erfindung betrifft eine Spannvorrichtung gemäß dem Oberbegriff des Anspruchs 1.

Derartige Spannvorrichtungen dienen generell zum Spannen eines Werkstücks. Hierzu weist die Spannvorrichtung ein Spannfutter und eine in dem Spannfutter gelagerte Spannzange auf. Die Spannzange dient zum Befestigen des jeweiligen Werkstücks. Die Spannzange wird hierzu, vorzugsweise über eine Zugstange, die insbesondere mittels einer Antriebseinheit betätigt, das heißt verschoben wird, betätigt. Die Spannzange ist hierzu vorteilhaft aus mehreren Spannzangensegmenten aufgebaut, die Stellbewegungen ausführen können und so das zu spannende Werkstück klemmen und auch wieder freigeben können.

Soll die Spannvorrichtung zum Spannen verschiedenartiger Werkstücke eingesetzt werden, muss bei der Spannvorrichtung die Spannzange am Spannfutter ausgetauscht werden. Ein Problem bei bekannten Spannvorrichtungen besteht darin, dass hierzu spezielle Hilfswerkzeuge notwendig sind, mittels derer einerseits die auszutauschende Spannzange am Spannfutter gelöst werden muss, um sie dann aus dem Spannfutter entnehmen zu können. In entsprechender Weise muss das Hilfswerkzeug eingesetzt werden, um die neue Spannzange im Spannfutter zu fixieren.

Der Einsatz der Hilfswerkzeuge bedeutet einen unerwünschten zusätzlichen konstruktiven Aufwand zur Ausbildung der Spannvorrichtung. Weiter ist nachteilig, dass die Hilfswerkzeuge lose Teile bilden, die separat aufbewahrt werden müssen. Oft stehen dann die Hilfswerkzeuge nicht zur Verfügung, wenn eine Spannzange am Spannfutter gewechselt werden muss, so dass ein zusätzlicher Aufwand für das Suchen oder Beschaffen des Hilfswerkzeugs entsteht.

Die EP 0 428 058 A2 betrifft ein Spannfutter gemäß dem Oberbegriff des Anspruchs 1, mit einem eine kegelstumpfförmige Ausnehmung mit Führungsflächen aufweisenden Futterkörper, in den ein mit einer Zugeinrichtung zusammenarbeitender und Spannbacken mit Gegen- führungsflächen besitzender Spannkopf mit einer axialen Aufnahmeöffnung für Werkstücke einbringbar ist, wobei die Führungsflächen mit den Gegenführungsflächen in Druckverbindung stehen. Der Spannkopf besitzt radial ausgerichtete Aufnahmen für die radial verstellbaren Spannbacken. Die Breite der Spannbacken ist kleiner als der Innenradius der Ausnehmung. Der Spannkopf ist über einen Bajonettverschluss, der mit einer Entriegelungsvorrichtung betätigt wird, lösbar mit dem Spannfutter verbunden.

Der Erfindung liegt die Aufgabe zugrunde, eine Spannvorrichtung der eingangs genannten Art bereitzustellen, welche bei konstruktiv geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Spannvorrichtung dient zum Spannen eines Werkstücks und umfasst ein Spannfutter und eine im Spannfutter gelagerte Spannzange. Ein Bajonettverschluss ist vorgesehen, mittels dessen die Spannzange werkzeuglos im Spannfutter befestigt oder von diesem gelöst werden kann.

Ein wesentlicher Vorteil der erfindungsgemäßen Spannvorrichtung besteht darin, dass die Spannzange im Spannfutter ohne Einsatz von zusätzlichen Hilfswerkzeugen montiert und bei Bedarf wieder aus dem Spannfutter ausgebaut werden kann. Zur Fixierung der Spannzange im Bajonettverschluss muss eine Bedienperson lediglich den Bajonettverschluss manuell betätigen.

Der Bajonettverschluss bildet einen integralen Bestandteil der Spannvorrichtung und ist damit unverlierbar an der Spannvorrichtung angebracht. Das Betätigen des Bajonettverschlusses kann von einer Bedienperson einfach und schnell durchgeführt werden, so dass die Montagezeiten für einen Einbau oder Ausbau der Spannzange sehr gering gehalten werden können.

Besonders vorteilhaft weist der Bajonettverschluss einen manuell betätigbaren Betätigungsring sowie einen in Wirkverbindung mit dem Betätigungsring stehenden Bajonettring auf, mittels dessen die Spannzange im Spannfutter fixierbar ist.

Der so ausgebildete Bajonettverschluss weist einen konstruktiv einfachen Aufbau auf. Dabei können die Komponenten des Bajonettverschlusses in der Spannvorrichtung integriert werden, ohne deren Baugröße nennenswert zu vergrößern.

Vorteilhaft sind der Betätigungsring und der Bajonettring am Spannfutter konzentrisch angeordnet, wobei der Bajonettring innerhalb des Betätigungsrings angeordnet ist. Von der Innenseite des Betätigungsrings sind hervorstehende, in radialer Richtung verlaufende Stifte vorgesehen, die in Bohrungen des Bajonettrings greifen, wodurch eine Drehbewegung des Betätigungsrings auf den Bajonettring übertragen wird.

Damit ist durch Drehen des Betätigungsrings der Bajonettring zwischen einer Verschlussposition, in welcher der Bajonettring die Spannzange im Spannfutter fixiert, und einer Öffnungsposition, in welcher der Bajonettring die Spannzange im Spannfutter freigibt, bewegbar.

Der Betätigungsring liegt an der Außenseite der Spannvorrichtung und kann so einfach von einer Bedienperson gedreht werden. Diese Drehbewegung des Betätigungsrings wird durch die Stifte auf den Bajonettring übertragen, der dann die Spannzange im Spannfutter verriegelt beziehungsweise freigibt Damit wird ein konstruktiv einfacher und gleichzeitig robuster Aufbau des Bajonettverschlusses realisiert.

Bei der Betätigung des Bajonettverschlusses bleibt die Lage der Spannzange unverändert, was durch eine Verdrehsicherung erhalten wird, die die Spannzange in einer festen radialen Position in dem Spannfutter hält.

Gemäß einer vorteilhaften Ausführungsform der Erfindung sind an einer Stirnseite des Bajonettrings sich radial nach innen erstreckende, in den vom Bajonettring umschlossenen Hohlraum ragende Laschen vorgesehen, welche Fixiermittel für die Spannzange bilden. An der Mantelfläche der Spannzange sind ausmündende Stege vorgesehen, welche durch Nuten getrennt sind und eine ringförmige Anordnung bilden. In der Verschlussposition des Bajonettrings liegen dessen Laschen an den Stegen an und verbinden so die Spannzange mit dem Spannfutter. In der Öffnungsposition des Bajonettrings liegen dessen Laschen in den Bereichen der Nuten, so dass die Spannzange aus dem Spannfutter ausführbar ist.

Zweckmäßig schließen die Stege und Nuten an die Stirnseite der Spannzange an, mit der die Spannzange in das Spannfutter eingeführt wird.

Auf diese Weise wird ein besonders einfacher und dennoch zuverlässiger Verschlussmechanismus erhalten, mit dem die Spannzange im Spannfutter fixiert und bei Bedarf wieder gelöst werden kann.

Die Spannzange besteht aus mehreren identischen Spannzangensegmenten, wobei jeweils benachbarte Spannzangensegmente über ein in axialer Richtung der Spannzange verlaufendes elastisches Element verbunden sind.

Die elastischen Elemente bestehen allgemein aus Formteilen bestehend aus Gummimischungen. Diese elastischen Elemente ermöglichen allgemein eine Relativbewegung der einzelnen Spannzangensegmente. Weiterhin bilden die elastischen Elemente Dichtelemente, das heißt die elastischen Elemente erfüllen eine Doppelfunktion.

Bei der erfindungsgemäßen Ausbildung dieser Anordnung wird erreicht, dass bei Schließen des Bajonettverschlusses die Spannzangensegmente über ihre gesamten Längen gleichförmig in radialer Richtung bewegt werden. Die elastischen Elemente werden über ihre gesamten Längen gleichförmig zusammengedrückt.

Dies stellt einen wesentlichen Vorteil gegenüber bekannten Spannvorrichtungen dar, bei welchen mittels Hilfswerkzeugen die Spannzange im Spannfutter montiert beziehungsweise gelöst wird. Dort führen nämlich bei der Montage der Spannzange deren Spannzangensegmente Kippbewegungen aus, was zur Folge hat, dass die die Spannzangensegmente verbindenden elastischen Elemente nicht gleichförmig zusammengedrückt werden. Vielmehr werden die elastischen Elemente lokal sehr stark zusammengedrückt. Dort sind die elastischen Elemente sehr hohen Beanspruchungen ausgesetzt, was zu einem erhöhten Verschleiß der elastischen Elemente und somit zu einer unerwünschten Reduzierung der Lebensdauer der Spannzange führt. Dieser Nachteil wird bei der erfindungsgemäßen Anordnung vermieden, da mit dem Bajonettverschluss eine gleichförmige radiale Bewegung der Spannzangensegmente hervorgerufen wird, was zu einer gleichförmigen Druckbelastung der elastischen Elemente führt.

Gemäß einer vorteilhaften Weiterbildung ist eine Verriegelungseinrichtung vorgesehen, mittels derer der Bajonettverschluss verriegelt ist, wenn mit diesem die Spannzange im Spannfutter befestigt ist.

Insbesondere weist die Verriegelungseinrichtung Mittel auf, mittels derer der Betätigungsring lagegesichert ist, wenn der Bajonettring in der Verschlussposition ist.

Mit dieser Verriegelungseinrichtung wird erreicht, dass sich der Bajonettverschluss beim Betrieb der Spannvorrichtung nicht unkontrolliert löst. Eine mögliche Realisierung einer solchen Verriegelungseinrichtung kann derart ausgebildet sein, dass durch ein Federelement in axialer Richtung der Spannvorrichtung wirkende Federkräfte generiert werden, die auf den Betätigungsring wirken und wenigstens ein am Betätigungsring vorgesehenes Verriegelungselement in einer zugeordneten Aufnahme am Spannfutter halten. Zur Betätigung des Bajonettverschlusses wird dann der Betätigungsring zunächst in axialer Richtung bewegt und kann dann gedreht werden. Nach dem Betätigungsvorgang mit dem Betätigungsring rastet dann das Verriegelungselement wieder durch die Federkraft selbsttätig in eine zugeordnete Aufnahme ein, so dass der Bajonettverschluss gesichert ist.

Die Erfindung wird im Folgenden anhand der Zeichnungen erläutert. Es zeigen:
- Figur 1:: Teildarstellung des Ausführungsbeispiels der erfindungsgemäßen Spannvorrichtung mit einem Bajonettverschluss zur Fixierung einer Spannzange in einer Spannvorrichtung.
- Figur 2:: Einzeldarstellung der Komponenten der Spannvorrichtung gemäß Figur 1.
- Figur 3:: Schnittdarstellung der Spannvorrichtung gemäß Figur 1 bei geöffnetem Bajonettverschluss.
- Figur 4:: Schnittdarstellung der Spannvorrichtung gemäß Figur 1 bei geschlossenem Bajonettverschluss.

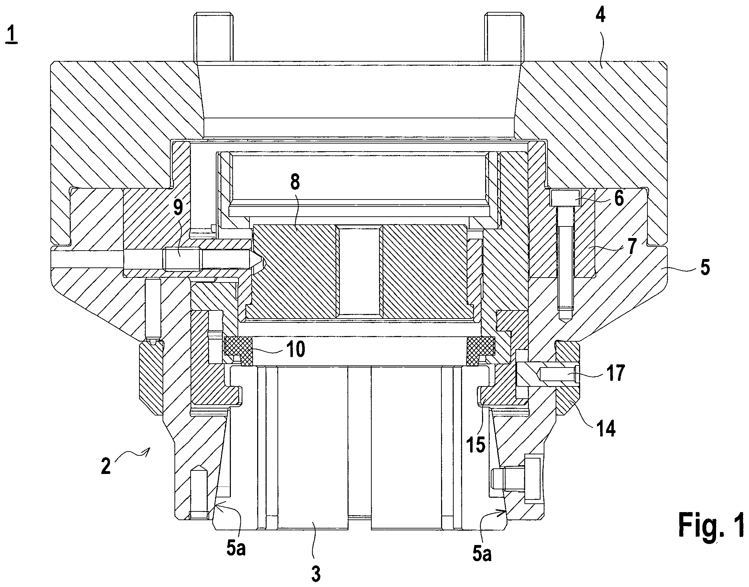

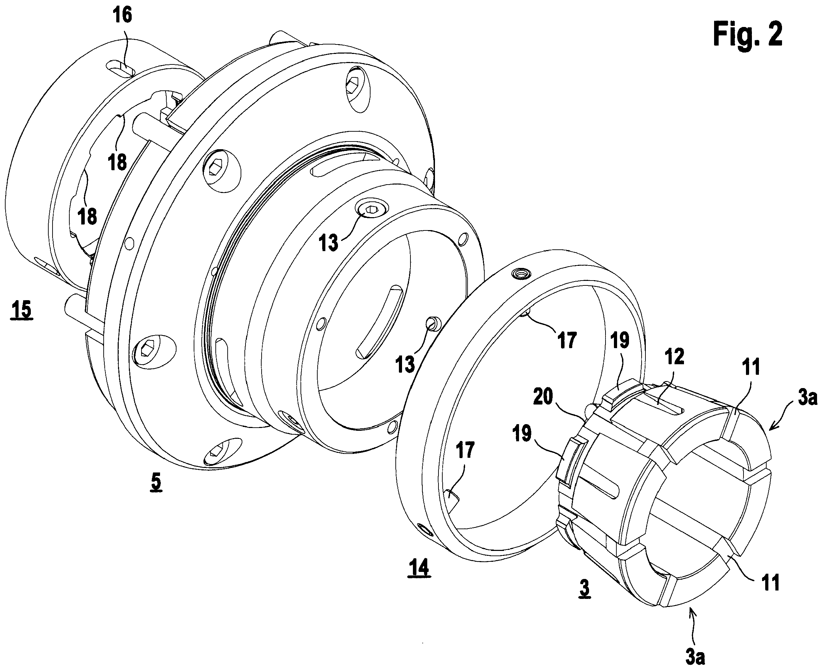

Figur 1 zeigt eine Teildarstellung eines Ausführungsbeispiels der erfindungsgemäßen Spannvorrichtung 1, welche zum Spannen eines Werkstücks dient. Dabei zeigt Figur 1 das Spannfutter 2 und die Spannzange 3 der Spannvorrichtung 1. Nicht dargestellt sind die Mittel zur Betätigung der im Spannfutter 2 gelagerten Spannzangen 3, die zum Bewegen der Spannzange 3 und damit zum Klemmen oder Freigeben des ebenfalls nicht dargestellten Werkstücks dienen. Diese Mittel können in bekannter Weise eine Antriebseinheit aufweisen, mittels derer eine Linearbewegung einer Zugstange erzeugt wird, die zur Betätigung der Spannzange 3 dient. Komponenten der in Figur 1 dargestellten Anordnung sind in Figur 2 als separate Teile dargestellt.

Das Spannfutter 2 der Spannvorrichtung 1 besteht, wie aus Figur 1 ersichtlich, aus einem Futterflansch 4 und einem Futterkörper 5, der auch in Figur 2 separat dargestellt ist. Der Futterflansch 4 und der Futterkörper 5 sind über Zylinderschrauben 6 verbunden, ein zwischen dem Futterflansch 4 und dem Futterkörper 5 liegenden Anschlaghalter 7 ist über Zylinderschrauben 6 mit dem Futterkörper 5 verschraubt.

Im Inneren des Spannfutters 2 ist ein Wechselanschlag 8 gelagert und mit einem Klemmstift 9 fixiert. Der Wechselanschlag 8 bildet ein austauschbares Referenzelement, mit welchem eine Adaption mit Axialanschlägen für unterschiedliche in der Spannzange 3 gelagerte Werkstücke erhalten wird.

Der Futterkörper 5 weist eine stirnseitig ausmündende, von konisch verlaufenden Anlageflächen 5a begrenzte Öffnung auf, in welche die Spannzange 3 eingesetzt wird. Figur 1 zeigt die in diese Öffnung eingesetzte Spannzange 3, wobei an deren hinteren, in die Öffnung eingeführten Rand ein im Futterkörper 5 gelagerter Dichtungsring 10 anschließt, der einen Verriegelungsbereich, in dem die Spannzange 3 im Spannfutter 2 fixiert wird, gegen ein Eindringen von Spänen und sonstigen Verschmutzungen schützt.

Die Spannzange 3 besteht, wie insbesondere aus Figur 2 ersichtlich, aus sechs identisch ausgebildeten Spannzangensegmenten 3a, wobei jeweils benachbarte Spannzangensegmente 3a über in axialer Richtung der Spannzange 3 verlaufende elastische Elemente 11 verbunden sind. Die elastischen Elemente 11 sind als Formteile, bestehend aus Gummimischungen, ausgebildet. Diese elastischen Elemente 11 bilden einerseits elastische Kopplungen zwischen den Spannzangensegmenten 3a, so dass bei Einwirken von Druckkräften auf die äußere Mantelfläche der Spannzange 3 die elastischen Elemente 11 zusammengedrückt werden und so die Spannzangensegmente 3a in radialer Richtung zusammengefahren werden können.

Die Spannzange 3 ist im Futterkörper 5 verdrehsicher gelagert. Als Verdrehsicherung sind an der Mantelfläche der Spannzange 3 in axialer Richtung verlaufende Nuten 12 vorgesehen. Im vorliegenden Fall ist an jedem Spannzangensegment 3a eine Nut 12 vorgesehen. In diese Nuten 12 greifen im Futterkörper 5 gelagerte Zylinderschrauben 13, wodurch die Spannzange 3 im Futterkörper 5 verdrehsicher gelagert ist.

Die Spannzange 3 wird erfindungsgemäß mittels eines Bajonettverschlusses und damit ohne jegliche Hilfswerkzeuge im Spannfutter 2 fixiert. Der Bajonettverschluss weist einen an der Außenseite der Futterkörper 5 gelagerten Betätigungsring 14, der von einer Bedienperson betätigt, das heißt gedreht werden kann. Weiterhin weist der Bajonettverschluss einen konzentrisch zum Betätigungsring 14 angeordneten und innerhalb diesem liegenden Bajonettring 15 auf, der zum Ver- und Entriegeln der Spannzange 3 dient.

Der Bajonettring 15 weist in seiner Mantelfläche Nuten 16 auf, in welche Stifte 17 greifen, die im Betätigungsring 14 gelagert sind und von dessen inneren Mantelfläche in radialer Richtung hervorstehen. Damit wird eine Drehbewegung des Betätigungsrings 14 auf den Bajonettring 15 übertragen.

Zur Fixierung der Spannzange 3 im Spannfutter 2 weist der Bajonettring 15 an einer Stirnseite Laschen 18 auf, die in radialer Richtung verlaufend in den vom Bajonettring 15 umschlossenen Hohlraum ragen. Die Laschen 18 sind identisch ausgebildet und jeweils durch Zwischenräume voneinander getrennt. Auch die Zwischenräume sind identisch ausgebildet, so dass die Laschen 18 in Umfangsrichtung des Bajonettrings 15 äquidistant angeordnet sind.

Korrespondierend zu den Laschen 18 am Bajonettring 15 sind im Bereich des hinteren, in das Spannfutter 2 führenden Bereichs der Spannzange 3 Stege 19 vorgesehen, die an der Mantelfläche der Spannzange 3 in radialer Richtung ausmünden. Im vorliegenden Fall sind sechs Stege 19 vorgesehen die durch Nuten 20 getrennt sind. Insgesamt sind sechs Stege 19 vorgesehen, wobei an jeweils einem Spannzangensegment 3a ein Steg 19 vorgesehen ist. Die Stege 19 sind jeweils identisch ausgebildet. Auch die Nuten 20 zwischen den Stegen 19 sind identisch ausgebildet, so dass die Stege 19 in Umfangsrichtung der Spannzange 3 äquidistant angeordnet sind. Die Längen der Stege 19, das heißt deren Ausdehnungen in Umfangsrichtung, sind an die Längen der Laschen 18 des Bajonettrings 15 angepasst.

Durch Drehen des Betätigungsrings 14 um 30° kann der Bajonettring 15 zwischen einer Öffnungsposition und einer Verschlussposition gedreht werden. Bei Einführen der Spannzange 3 in das Spannfutter 2 ist der Bajonettring 15 in seiner Öffnungsposition. Sobald die Spannzange 3 bis in ihre Sollposition in die Spannzange 3 eingeschoben ist, liegen, da sich der Bajonettring 15 in der Öffnungsposition befindet, die Laschen 18 des Bajonettrings 15 in den Bereichen der Nuten 20. Dann wird zur Verriegelung der Spannzange 3 in dem Spannfutter 2 der Betätigungsring 14 um 30° gedreht bis der Bajonettring 15 in der Verschlussposition liegt. In der Verschlussposition liegen die Laschen 18 des Bajonettrings 15 an den Oberseiten der Stege 19 der Spannzange 3 an und sperren somit die Spannzange 3 gegen ein Herausnehmen aus dem Spannfutter 2. Soll die Spannzange 3 aus dem Spannfutter 2 wieder entnommen werden, wird der Bajonettring 15 wieder in die Öffnungsposition überführt.

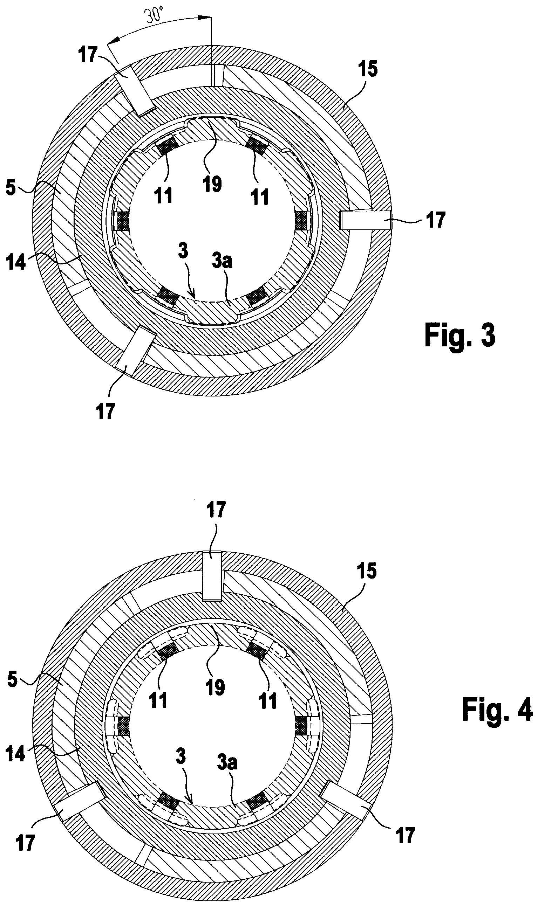

Die Schnittdarstellung gemäß Figur 3 zeigt den Bajonettring 15 in der Öffnungsposition, während die Schnittdarstellung gemäß Figur 4 den Bajonettring 15 in der Verschlussposition zeigt. Wie aus Figur 3 ersichtlich, befinden sich die Laschen 18 des Bajonettrings 15 in der Öffnungsposition im Bereich der Nuten 20 zwischen den Stegen 19 der Spannzange 3 und überdecken somit einen Teil der elastischen Elemente 11. Bei der in Figur 4 dargestellten Verschlussposition sind die Laschen 18 vor die Stege 19 geschoben und daher in Figur 4 nicht mehr sichtbar, jedoch liegen jetzt die elastischen Elemente 11 frei.

Narr Beteiligungs GmbH
73230 Kirchheim/Teck, DE

### Bezugszeichenliste

(1) Spannvorrichtung
(2) Spannfutter
(3) Spannzange
(3a) Spannzangensegment
(4) Futterflansch
(5) Futterkörper
(5a) Anlagefläche
(6) Zylinderschraube
(7) Anschlaghalter
(8) Wechselanschlag
(9) Klemmstifte
(10) Dichtungsring
(11) elastisches Element
(12) Nut
(13) Zylinderschraube
(14) Betätigungsring
(15) Bajonettring
(16) Nut
(17) Stift
(18) Lasche
(19) Stege
(20) Nut

## Patentansprüche

1. Spannvorrichtung (1) zum Spannen eines Werkstücks, mit einem Spannfutter (2) und einer im Spannfutter (2) gelagerten Spannzange (3), wobei ein Bajonettverschluss vorgesehen ist, **dadurch gekennzeichnet, dass** der Bajonettverschluss einen manuell betätigbaren Betätigungsring (14) sowie einen in Wirkverbindung mit dem Betätigungsring (14) stehenden Bajonettring (15), mittels dessen die Spannzange (3) am Spannfutter (2) fixierbar ist, aufweist, so dass die Spannzange (3) werkzeuglos am Spannfutter (2) befestigt oder von diesem gelöst werden kann.

2. Spannvorrichtung nach Anspruch 1, **dadurch gekennzeichnet, dass** der Betätigungsring (14) und der Bajonettring (15) am Spannfutter (2) konzentrisch angeordnet sind, wobei der Bajonettring (15) innerhalb des Betätigungsrings (14) angeordnet ist.

3. Spannvorrichtung nach einem der Ansprüche 1 oder 2, **dadurch gekennzeichnet, dass** durch Drehen des Betätigungsrings (14) der Bajonettring (15) zwischen einer Verschlussposition, in welcher der Bajonettring (15) die Spannzange (3) am Spannfutter (2) fixiert, und einer Öffnungsposition, in welcher der Bajonettring (15) die Spannzange (3) am Spannfutter (2) freigibt, bewegbar ist.

4. Spannvorrichtung nach Anspruch 3, **dadurch gekennzeichnet, dass** von der Innenseite des Betätigungsrings (14) hervorstehende, in radialer Richtung verlaufende Stifte (17) vorgesehen sind, die in Nuten (16) des Bajonettrings (15) greifen, wodurch eine Drehbewegung des Betätigungsrings (14) auf den Bajonettring (15) übertragen wird.

5. Spannvorrichtung nach einem der Ansprüche 1 bis 4, **dadurch gekennzeichnet, dass** an einer Stirnseite des Bajonettrings (15) sich radial nach innen erstreckende, in den vom Bajonettring (15) umschlossenen Hohlraum ragende Laschen (18) vorgesehen sind, welche Fixiermittel für die Spannzange (3) bilden.

6. Spannvorrichtung nach Anspruch 5, **dadurch gekennzeichnet, dass** an der Mantelfläche der Spannzange (3) ausmündende Stege (19) vorgesehen sind, welche durch Nuten (20) getrennt sind und eine ringförmige Anordnung bilden, und dass in der Verschlussposition des Bajonettrings (15) dessen Laschen (18) an den Stegen (19) anliegen und so die Spannzange (3) im Spannfutter (2) fixieren, und dass in der Öffnungsposition des Bajonettrings (15) dessen Laschen (18) in den Bereichen der Nuten (20) liegen, so dass die Spannzange (3) aus dem Spannfutter (2) ausführbar ist.

7. Spannvorrichtung nach Anspruch 6, **dadurch gekennzeichnet, dass** die Stege (19) und Nuten (20) an die Stirnseite der Spannzange (3) anschließen, mit der die Spannzange (3) in das Spannfutter (2) eingeführt wird.

8. Spannvorrichtung nach einem der Ansprüche 1 bis 7, **dadurch gekennzeichnet, dass** die Spannzange (3) aus mehreren identischen Spannzangensegmenten (3a) besteht, wobei jeweils benachbarte Spannzangensegmente (3a) über ein in axialer Richtung der Spannzange (3) verlaufendes elastisches (11) Element verbunden sind, so dass bei Schließen des Bajonettverschlusses die Spannzangensegmente (3a) über ihre gesamten Längen gleichförmig in radialer Richtung bewegt werden und die elastischen Elemente (11) über ihre gesamten Längen gleichförmig zusammengedrückt werden.

9. Spannvorrichtung nach einem der Ansprüche 1 bis 8, **dadurch gekennzeichnet, dass** eine Verriegelungseinrichtung vorgesehen ist, mittels derer der Bajonettverschluss verriegelt ist, wenn mit diesem die Spannzange (3) im Spannfutter (2) befestigt ist.

10. Spannvorrichtung nach Anspruch 9, **dadurch gekennzeichnet, dass** die Verriegelungseinrichtung Mittel aufweist, mittels derer der Betätigungsring (14) lagegesichert ist, wenn der Bajonettring (15) in der Verschlussposition ist.

## Claims

1. Clamping device (1) for clamping a workpiece, comprising a chuck (2) and a collet device (3) mounted in the chuck (2), wherein a bayonet coupling is provided, **characterised in that** the bayonet coupling comprises a manually actuable actuating ring (14) as well as a bayonet ring (15) which is disposed in operative connection with the actuating ring (14) and by means of which the collet device (3) is fixable to the chuck (2) so that the collet device (3) can be fastened to or removed from the chuck (2) in tool-free manner.

2. Clamping device according to claim 1, **characterised in that** the actuating ring (14) and the bayonet ring (15) are concentrically arranged at the chuck (2), wherein the bayonet ring (15) is arranged within the actuating ring (14).

3. Clamping device according to one of claims 1 and 2, **characterised in that** through rotation of the actuating ring (14) the bayonet ring (15) is movable between a closed position in which the bayonet ring (15) fixes the collet device (3) to the chuck (2) and an open position in which the bayonet ring (15) frees the collet device (3) at the chuck (2).

4. Clamping device according to claim 3, **characterised in that** pins (17) which project from the inner side of the actuating ring (14) and extend in radial direction and which engage in grooves (16) of the bayonet ring (15) are provided, whereby rotational movement of the actuating ring (14) is transmitted to the bayonet ring (15).

5. Clamping device according to any one of claims 1 to 4, **characterised in that** tongues (18), which extend radially inwardly at an end of the bayonet ring (15) and project into the cavity enclosed by the bayonet ring (15) and which form fixing means for the collet device (3), are provided.

6. Clamping device according to claim 5, **characterised in that** webs (19), which communicate with the circumferential surface of the collet device (3) and are separated by grooves (20) and which form an annular arrangement, are provided and that in the closed position of the bayonet ring (15) the straps (18) thereof bear against the webs (19) and thus fix the collet device (3) in the chuck (2) and that in the open position of the bayonet ring (15) the tongues (18) thereof lie in the regions of the grooves (20) so that the collet device (3) can be led out of the chuck (2).

7. Clamping device according to claim 6, **characterised in that** the webs (19) and grooves (20) connect with the end of the collet device (3) by which the collet device (3) is introduced into the chuck (2).

8. Clamping device according to any one of claims 1 to 7, **characterised in that** the collet device (3) consists of a plurality of identical collet device segments (3a), wherein respectively adjacent collet device segments (3a) are connected by way of a resilient element (11) extending in axial direction of the collet device (3) so that when the bayonet closure is closed the collet device segments (3a) are uniformly moved in radial direction over entire lengths thereof and the resilient elements (11) are uniformly compressed over the entire lengths thereof.

9. Clamping device according to any one of claims 1 to 8, **characterised in that** a locking device, by means of which the bayonet closure is locked when the collet device (3) is fastened in the chuck (2) by this, is provided.

10. Clamping device according to claim 9, **characterised in that** the locking device comprises means by way of which the actuating ring (14) is secured in position when the bayonet ring (15) is in the closed position.

## Revendications

1. Dispositif de serrage (1) pour serrer une pièce d'oeuvre, avec un mandrin de serrage (2) et avec une pince de serrage (3) montée dans le mandrin de serrage (2), sachant qu'il est prévu un système de fermeture à baïonnette,
**caractérisé en ce que** le système de fermeture à baïonnette présente une bague d'actionnement (14) pouvant être actionnée manuellement, ainsi qu'une bague à baïonnette (15) qui se trouve en liaison fonctionnelle avec la bague d'actionnement (14) et au moyen de laquelle la pince de serrage (3) peut être fixée en position sur le mandrin de serrage (2), de sorte que la pince de serrage (3) peut être fixée sur le mandrin de serrage (2) ou détachée de ce dernier sans outil.

2. Dispositif de serrage selon la revendication 1, **caractérisé en ce que** la bague d'actionnement (14) et la bague à baïonnette (15) sont disposées concentriquement sur le mandrin de serrage (2), sachant que la bague à baïonnette (15) est disposée à l'intérieur de la bague d'actionnement (14).

3. Dispositif de serrage selon l'une des revendications 1 ou 2, **caractérisé en ce que**, en faisant tourner la bague d'actionnement (14), la bague à baïonnette (15) peut être déplacée entre une position de fermeture, dans laquelle la bague à baïonnette (15) fixe en position la pince de serrage (3) sur le mandrin de serrage (2), et une position d'ouverture, dans laquelle la bague à baïonnette (15) libère la pince de serrage (3) sur le mandrin de serrage (2).

4. Dispositif de serrage selon la revendication 3, **caractérisé en ce qu'**il est prévu des ergots (17) faisant saillie du côté intérieur de la bague d'actionnement (14) et s'étendant en direction radiale, ergots qui s'engagent dans des rainures (16) de la bague à baïonnette (15), de sorte qu'un mouvement de rotation de la bague d'actionnement (14) est transmis à la bague à baïonnette (15).

5. Dispositif de serrage selon l'une des revendications 1 à 4, **caractérisé en ce qu'**il est prévu des languettes (18) s'étendant radialement vers l'intérieur sur un côté frontal de la bague à baïonnette (15) et faisant saillie dans l'espace vide entouré par la bague à baïonnette (15), languettes qui forment des moyens de fixation en position pour la pince de serrage (3).

6. Dispositif de serrage selon la revendication 5, **caractérisé en ce qu'**il est prévu des barrettes (19) aboutissant sur la face d'enveloppe de la pince de serrage (3), barrettes qui sont séparées par des rainures (20) et forment un agencement annulaire, et **en ce que**, dans la position de fermeture de la bague à baïonnette (15), les languettes (18) de celle-ci s'appliquent contre les barrettes (19) et fixent ainsi en position la pince de serrage (3) dans le mandrin de serrage (2), et **en ce que**, dans la position d'ouverture de la bague à baïonnette (15), les languettes (18) de celle-ci se situent dans les régions des rainures (20), de sorte que la pince de serrage (3) peut être sortie du mandrin de serrage (2).

7. Dispositif de serrage selon la revendication 6, **caractérisé en ce que** les barrettes (19) et les rainures (20) sont contiguës au côté frontal de la pince de serrage (3) par lequel la pince de serrage (3) est introduite dans le mandrin de serrage (2).

8. Dispositif de serrage selon l'une des revendications 1 à 7, **caractérisé en ce que** la pince de serrage (3) est constituée de plusieurs segments identiques (3a) de pince de serrage, sachant que des segments (3a) de pince de serrage respectivement voisins sont reliés par l'intermédiaire d'un élément élastique (11) s'étendant dans la direction axiale de la pince de serrage (3), de sorte que, lors de la fermeture du système de fermeture à baïonnette, les segments (3a) de pince de serrage sont déplacés en direction radiale uniformément sur toutes leurs longueurs et les éléments élastiques (11) sont comprimés uniformément sur toutes leurs longueurs.

9. Dispositif de serrage selon l'une des revendications 1 à 8, **caractérisé en ce qu'**il est prévu un organe de verrouillage au moyen duquel le système de fermeture à baïonnette est verrouillé lorsque la pince de serrage (3) est fixée par ce dernier dans le mandrin de serrage (2).

10. Dispositif de serrage selon la revendication 9, **caractérisé en ce que** l'organe de verrouillage présente des moyens par lesquels la bague d'actionnement (14) est bloquée en position lorsque la bague à baïonnette (15) est dans la position de fermeture.
